# EUROPÄISCHE PATENTSCHRIFT

(11) **EP 0 951 097 B1**
(45) Veröffentlichungstag und Bekanntmachung des Hinweises auf die Patenterteilung: **02.08.2006**
(21) Anmeldenummer: 99102484.5
(22) Anmeldetag: 10.02.1999
(51) Int. Cl.: H01R 9/26, H02B 1/052

(54) **Montagefuss für anreihbare Einbaugehäuse oder Klemmen**
Mounting base for clip-on terminal blocks for side-by-side rail- or strip- mounting
Pied de fixation pour des blocs de connexion à accrochage pour le montage côte à côte sur rail ou sur barrette

(30) Priorität: 15.04.1998 DE 29806691 U
(43) Veröffentlichungstag der Anmeldung: 20.10.1999
(73) Patentinhaber: Weidmüller Interface GmbH & Co., 32760 Detmold (DE)
(72) Erfinder: Bernhards, Peter, 32758 Detmold (DE); Schild, Wolfgang, 32049 Herford (DE); Steinmeier, Rudolf, 32760 Detmold (DE); Wilmes, Manfred, 32760 Detmold (DE)
(74) Vertreter: Stracke, Alexander

(56) Entgegenhaltungen:
- EP-A- 0 766 483
- DE-A- 3 201 915
- DE-U- 29 720 511
- US-A- 4 878 859

## Beschreibung

Die Erfindung betrifft einen Montagefuß aus Kunststoff nach dem Oberbegriff des Anspruches 1.

Ein gattungsgemäßer Montagefuß ist aus der EP 0 326 624 B1 oder den Schriften US-A-4 878 859 und DE-U-297 20 511 bekannt. Die in diesen Schriften dargestellten Montagefüße für Reihenklemmen sind durch ein senkrechtes Aufsetzen auf die Tragschiene montierbar. Dazu ist das elastische Element am Befestigungszapfen derart drehgelagert, daß Schiebebewegungen jedes Schieberstückes auf das jeweils andere Schieberstück in der entgegengesetzten Schieberichtung übertragen werden. In den beiden Schieberstükken sind äußere Kammern ausgebildet, von deren Grund seitlich eingespritzte Federstege vorstehen, wobei im entsprechenden Bereich des umgebenden Gehäuses jeweils eine Ausnehmung gebildet ist, deren nach außen weisende Begrenzungswand ein Gegenlager für die elastische Verformung des Federsteges bildet.

Beim Aufsetzen des Montagefußes auf die Tragschiene werden die angeschrägten Rasthaken zunächst nach außen gedrückt und übergreifen dann schnappend die Enden Tragschienenschenkel. Das Abnehmen der Reihenklemme von der Tragschiene erfolgt dadurch, daß die elastisch abgefederten Schieberstücke in deren Öffnungsbewegung außer Eingriff mit der Tragschienenkonstruktion gebracht werden, so daß der Montagefuß wiederum senkrecht nach oben von der Tragschiene abgehoben werden kann.

Aus der DE 297 20 511 U1 ist der Einsatz eines im wesentlichen nach Art der EP 0 326 624 B1 aufgebauten Montagefußes bei Einbaugehäusen für Leiterplatten und Elektronikbausteine bekannt.

Der gattungsgemäße Montagefuß hat sich zwar an sich bewährt, er unterliegt jedoch wie die meisten Bauelemente der Elektrotechnik dem ständigen Zwang nach einer billigeren Herstellung.

Der Erfindung liegt von daher die Aufgabe zugrunde, den gattungsgemäßen Montagefuß konstruktiv so zu vereinfachen, daß die Herstellkosten - unter Gewährleistung einer weiterhin guten Handhabbarkeit - gegenüber dem gattungsgemäßen Stand der Technik gesenkt werden.

Die Erfindung löst diese Aufgabe durch den Gegenstand des Anspruches 1.

Anders als beim Stand der Technik dient der Befestigungszapfen somit nicht mehr als Drehlager, welches die Bewegung der beiden Schiebestücke quasi miteinander koppelt, so daß durch das Lösen nur eines Schiebestückes das jeweils gegenüberliegende Schiebestück mitgelöst wird, so daß der Montagefuß nebst zugehörigem Gehäuse oder zugehöriger Klemme senkrecht von der Tragschiene gelöst werden kann sondern als Festlager. Dadurch kann der Montagefuß bzw. ein daran befestigtes Gehäuse zwar nach wie vor in einfachster Weise senkrecht von oben auf die Tragschiene gesetzt werden, das Abnehmen von der Tragschiene erfolgt aber nach dem Lösen des Schiebestückes durch anschließendes Verschwenken des Montagefußes nebst dem darauf befestigten Bauelement zur Seite. Dabei besteht die praktische Möglichkeit zum Abnehmen des Montagefußes zu beiden Seiten der Tragschiene, wodurch die Erfindung den allermeisten Einbausituationen gerecht wird. Auch der erfindungsgemäße Montagefuß gewährleistet damit eine gut Handhabbarkeit.

Darüberhinaus bietet der erfindungsgemäße Montagefuß den weiteren Vorteil, daß er nur ein einziges mittiges Federelement aufweist und die Möglichkeit zur Einsparung der angespritzten Federelemente bietet, welche die Rasthaken nach dem Stand der Technik gegen die Tragschiene drücken. Die Erfindung schafft damit ein besonders einfaches und kostengünstiges Spritzgußteil, welches auch durch diesen Vorteil gegenüber dem gattungsgemäßen Montaegfuß deutlich günstiger herstellbar ist.

Eine besonders bevorzugte Variante der Erfindung zeichnet sich dadurch aus, daß das Federelement eine Mehrzahl von im wesentlichen meanderförmig aneinandergeformten Federschenkeln aufweist. Derart geformte Federschenkel bieten eine fertigungstechnisch besonders unkomplizierte Möglichkeit zur einstückigen Ausbildung der Feder mit den Schieberstücken.

Eine weitere besonders bevorzugte Weiterbildung der Erfindung zeichnet sich dadurch aus, daß die Schieberstücke mit einem Freispiel senkrecht zu ihrer Bewegungsrichtung im Gehäuse gelagert sind und daß die Schieberstücke und die umgebenden Gehäusebereiche derart mit Blockierkanten versehen sind, daß ohne eine Anhebebewegung des Gehäuses gegenüber den die Schenkel der die Tragschiene übergreifenden Rasthaken die Blockierkanten übereinander hinweggleitbar sind, so daß die Schieberstückbewegung freigegeben ist und bei Vorliegen einer entsprechenden Anhebebewegung die Blockierkanten in einer die Schieberstückbewegung blockierende Kollisionslage gebracht sind. Diese Variante der Erfindung verhindert in einfacher Weise ein ungewolltes Abrasten des Montagefußes von der Tragschiene.

Ein weiteres besonders bevorzugtes Ausführungsbeispiel der Erfindung zeichnet sich dadurch aus, daß die unteren Innenflächen der Rasthaken als nach außen abfallende Schrägen ausgebildet sind. Diese Ausbildung der Rasthaken sort für eine einfache und sichere Führung beim Aufsetzen des Montagefußes auf die Tragschiene. Dabei sind die unteren Außenflächen der Rasthaken ferner als Anlageschultern für gehäuseseitige Anschläge zur Begrenzung der Verschiebbarkeit der Schieberstücke ausgebildet. Dies hat den Vorteil, daß die Rasthaken auch die Aufgabe der Begrenzung der Verschieblichkeit der Schieberstücke entgegen der Federwirkung gewährleisten. Da das Ausformen separater Anschlagelemente entfällt, ergibt sich eine weitere Kostensenkung bei der Herstellung des Montagefußes und eines zugehörigen Gehäuses.

Weitere vorteilhafte Ausführungsformen der Erfindung sind den übrigen Unteransprüche zu entnehmen.

Nachfolgend wird die Erfindung anhand eines Ausführungsbeispieles unter Bezug auf die Zeichnung näher beschrieben. Es zeigen:
- Fig. 1: eine perspektivische Ansicht eines erfindungsgemäßen Montagefusses mit einer Teilillustration des den Montagefußes umgebenden Einbaugehäuses;
- Fig. 2: eine perspektivische Teilansicht des Ausführungsbeispieles aus Fig. 1;
- Fig. 3: eine Seitenansicht des Ausführungsbeispieles aus Fig. 2;
- Fig. 4: eine perspektivische Einzelansicht des Montagefußes aus Fig. 1 bis 3; und
- Fig. 5: eine Seitenansicht eines Abschnittes eines mit einem Montagefuß gemäß der Erfindung ausgerüsteten zweischaligen Einbaugehäuses unter teilweiser Fortlassung der einen Gehäusehälfte.

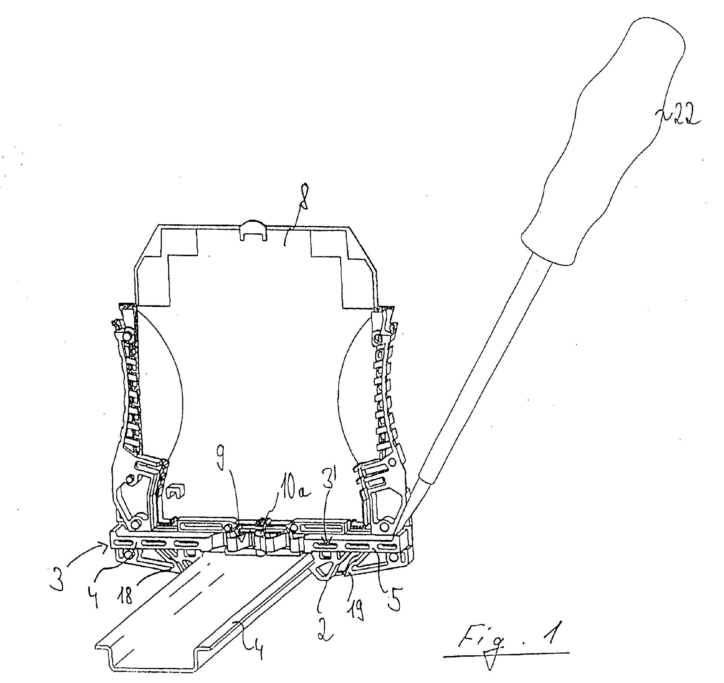

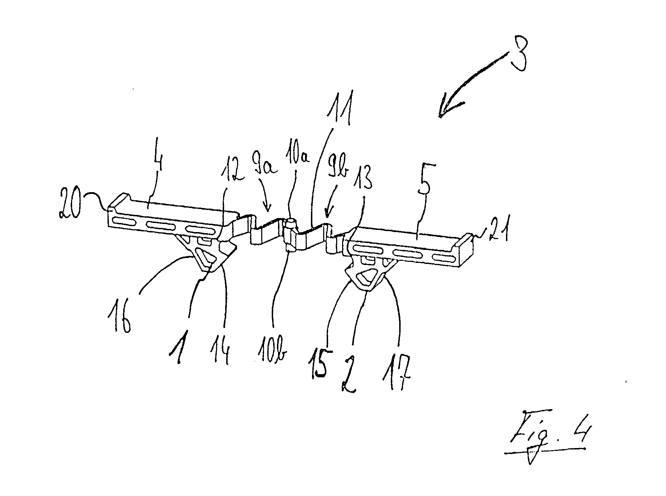

Bei dem in Fig. 1 bis 5 dargestellten Ausführungsbeispiel eines Montagefußes für ein Einbaugehäuse sind die beiden Rasthaken 1, 2 des Montagefußes 3 aus Kunststoff (mit gewichtssparenden Ausnehmungen 3', die in der Rast- oder Montagestellung die freien Enden der Schenkel einer Tragschiene 4 übergreifen, in bezogen auf deren Längsseiten abgesetzter Form auf der Unterseite von Schieberstücken 5, 6 vorgesehen. Die Schieberstücke 5, 6 sind (in Richtung auf die Eingriffsstellung der Rasthaken 1, 2 mit den Schenkeln der Tragschiene 4 und von dieser Eingriffsstellung fort) verschieblich in Führungen 7 eines umgebenden Gehäuses 8 geführt, welches z.B. zur Aufnahme von Leiterplatinen oder Elektronikbausteinen nutzbar ist.

Die beiden Schieberstücke 5, 6 aus Kunststoff sind einstückig mit einem elastisch verformbaren Federelement 9 ausgebildet, welches beidseitig mit in Einbaustellung nach oben und unten vorkragenden Befestigungszapfen 10a,b zum Eingriff in entsprechend ausgeformte gehäuseseitige Ausnehmungen (die hier von den Befestigungszapfen 10a,b verdeckt sind) versehen ist. Die Befestigungszapfen 10a,b gewährleisten beim Eingriff in die entsprechenden Gehäuseausnehmungen auf einfache Weise eine Unterteilung des Federelementes 9 in unabhängig voneinander bewegbare, eigenständige Federbereiche 9a und 9b.

Das Federelement 9 weist eine Mehrzahl von im wesentlichen meanderförmig aneinandergeformten Federschenkeln 11 auf, welche die Schieberstücke 4, 5 und die daran angeformten Befestigungshaken 1, 2 in Richtung der Tragschiene 4 ziehen. Separate Federschenkel sind damit nicht mehr erforderlich, das Federelement 8 sorgt vielmehr anders als das Drehgelenk des gattungsgemäßen Standes der Technik auch für eine sichere Verriegelung der Rasthaken 1, 2 auf der Tragschiene 4.

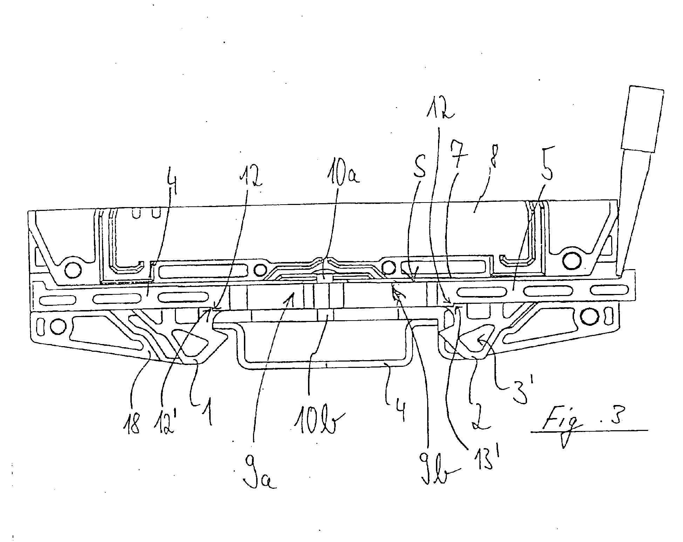

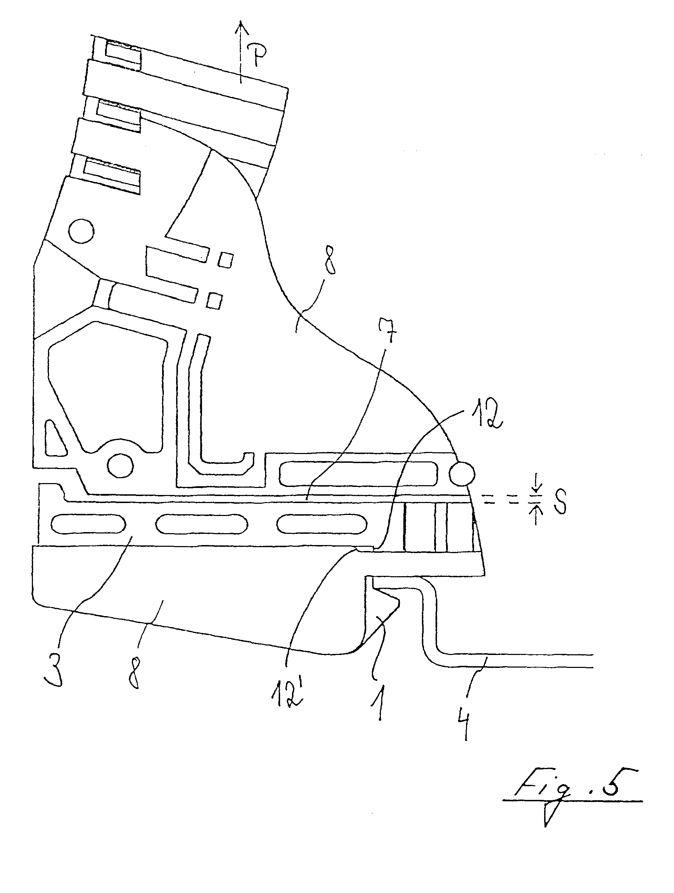

Wie in Fig. 3 und besonders deutlich in Fig. 5 dargestellt, sind die Schieberstücke 4, 5 mit einem Freispiel S senkrecht zu ihrer Bewegungsrichtung im Gehäuse 8 gelagert. Dabei sind die Schieberstücke 5, 6 und die umgebenden Gehäusebereiche mit Blockierkanten 12, 13; 12', 13' versehen (in Fig. 3 sind nur die Blockierkanten der Schieberstücke zu erkennen), so daß ohne eine Anhebebewegung des Gehäuses 8 gegenüber den die Schenkel der Tragschiene 4 übergreifenden Rasthaken 1, 2 die Blockierkanten 12, 13 des Montagefußes und die leicht angeschrägten Blockierkanten 12', 13' des Gehäuses 8 übereinander hinweggleitbar sind, so daß die Schieberstückbewegung freigegeben ist und bei Vorliegen einer entsprechenden Anhebebewegung des Gehäuses (siehe den Pfeil P in Fig. 5) die Blockierkanten 12, 13; 12', 13' in eine die Schieberstückbewegung blockierende Kollisionslage gebracht sind.

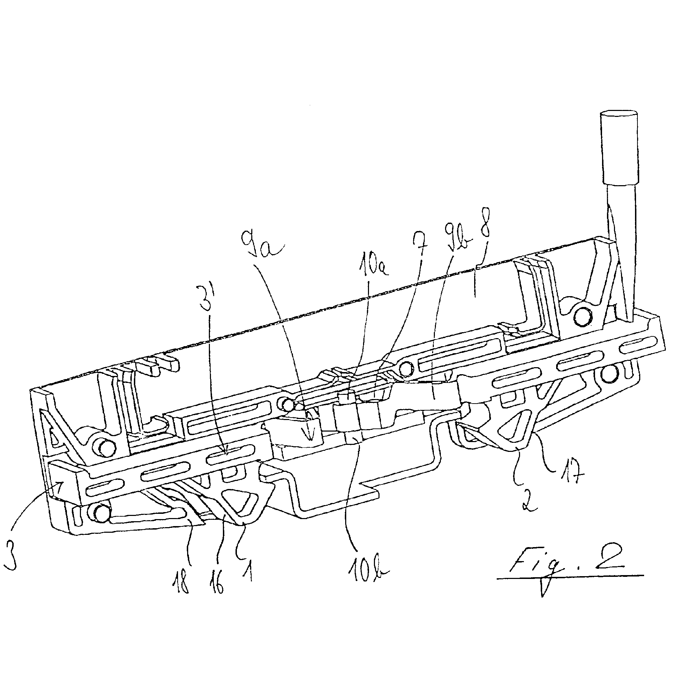

Wie weiter in Fig. 2, 3 und 4 zu erkennen, sind die unteren Innenflächen der Rasthaken 1, 2 als nach außen abfallende Schrägen 14, 15 ausgebildet, so daß ein senkrechtes Aufsetzen auf die Tragschiene 4 erleichtert wird. Die unteren Außenflächen der Rasthaken 1, 2 bilden nach außen ansteigende Anlageschultern 16, 17 für gehäuseseitige Anschläge 18, 19 zur Begrenzung der Verschiebbarkeit der Schieberstücke 5, 6. Die von dem Federelement 9 abgewandten Enden der Schieberstücke 5, 6 weisen ferner Betätigungstege 20, 21 auf, hinter die ein Schraubenzieher 22 oder ein ähnlich ausgeformtes Werkzeug setzbar ist.

### Bezugszeichen

- Rasthaken: 1 , 2
- Montagefuß: 3
- Ausnehmungen: 3'
- Tragschiene: 4
- Schieberstücke: 5, 6
- Führungen: 7
- Gehäuse: 8
- Federelement: 9
- Federbereiche: 9a,b
- Befestigungszapfen: 10a,b
- Federschenkel: 11
- Blockierkanten: 12, 13; 12', 13'
- Schrägen: 14, 15
- Anlageschultern: 16, 17
- Anschläge: 18, 19
- Betätigungstege: 20, 21
- Schraubenzieher: 22

## Patentansprüche

1. Montagefuß (3) aus Kunststoff mit einem darauf befestigten Bauelement wie ein anreihbares Einbaugehäuse (8), eine Reihenklemme oder eine derartige auf Tragschienen aufrastbare Klemme,
wobei der Montagefuß Rasthaken (1, 2) zum Übergreifen der Schenkel einer Tragschiene (4) aufweist, die an gehäuseseitig geführten Schieberstücken (5, 6) angeordnet sind, wobei die beiden Schieberstücke (5, 6) über ein elastisch verformbares Element, welches beidseitig mit Befestigungszapfen (10a, 10b) zum Eingriff entsprechend ausgeformte gehäuseseitige Ausnehmungen versehen ist, insbesondere einstückig miteinander verbunden sind,
wobei das elastische Element als Federelement (9) ausgebildet ist, das durch die Befestigungszapfen (10a, 10c) in Federbereiche (9a, 9b) unterteilt ist,
**dadurch gekennzeichnet, daß**
das Federelement (9) durch die Befestigungszapfen (10a, 10b) derart in eigenständig ausgebildete Federbereiche (9a, 9b) unterteilt ist, daß die Federbereiche unabhängig voneinander bewegbar sind und
derart, dass der Befestigungszapfen (10a, 10b) als Festlager dient, so dass durch das Lösen von nur einem der Schieberstücke das gegenüberliegende Schieberstück nicht mitgelöst wird, so dass das Abnehmen des Bauelements von der Tragschiene nach dem Lösen von einem der Schiebestücke durch Verschwenken des Montagefußes nebst einem darauf befestigten Bauelement zur Seite erfolgt..

2. Montagefuß nach Anspruch 1, **dadurch gekennzeichnet, daß** das Federelement (9) eine Mehrzahl von im wesentlichen meanderförmig aneinandergeformten Federschenkeln (11) aufweist.

3. Montagefuß nach Anspruch 1 oder 2, **dadurch gekennzeichnet, daß** die Schieberstücke (5, 6) mit einem Freispiel senkrecht zu ihrer Bewegungsrichtung im Gehäuse (8) gelagert sind.

4. Montagefuß nach Anspruch 3, **dadurch gekennzeichnet, daß** die Schieberstücke (5, 6) und die umgebenden Gehäusebereiche mit Blockierkanten (12, 13; 12', 13') versehen sind, derart, daß ohne eine Anhebebewegung des Gehäuses (8) gegenüber den die Schenkel der die Tragschiene (4) übergreifenden Rasthaken (1, 2) die Blockierkanten (12, 13; 12', 13') übereinander hinweggleitbar sind, so daß die Schieberstückbewegung freigegeben ist und bei Vorliegen einer entsprechenden Anhebebewegung die Blockierkanten (12, 13; 12', 13') in eine die Schieberstückbewegung blockierende Kollisionslage gebracht sind.

5. Montagefuß nach einem der vorstehenden Ansprüche, **dadurch gekennzeichnet, daß** die unteren Innenflächen der Rasthaken (1, 2) als nach außen abfallende Schrägen und die unteren Außenflächen der Rasthaken als nach außen ansteigende Anlageschultern (16, 17) für gehäuseseitige Anschläge (18, 19) zur Begrenzung der Verschiebbarkeit der Schieberstücke (5, 6) ausgebildet sind.

6. Montagefuß nach einem der vorstehenden Ansprüche, **dadurch gekennzeichnet**, das Federelement (9) zur Verriegelung der Rasthaken (1, 2) auf der Tragschiene (4) ausgebildet ist.

7. Montagefuß nach einem der vorstehenden Ansprüche, **dadurch gekennzeichnet, daß** die von der Feder abgewandten Enden der Schieberstücke Betätigungstege (20) aufweisen.

## Claims

1. Mounting support (3) made of plastic, with a structural element such as an equipment housing (8) that can be connected in series, a line-up terminal or a terminal of similar type that can be fixed onto support rails attached thereto,
such that the mounting support comprises detent hooks (1, 2) to fit over the flange of a support rail (4), which are arranged on sliding elements (5, 6) guided on the housing, such that the two sliding element (5, 6) are connected to one another, in particular as one piece, by an elastically deformable element which is provided on both sides with fixing pins (10a, 10b) to engage in correspondingly formed recesses in the housing,
such that the elastic element is formed as a spring element (9) which is divided by the fixing pins (10a, 10c) into spring sections (9a, 9b),
**characterised in that**
the spring element (9) is divided by the fixing pins (10a, 10b) into independently formed spring sections (9a, 9b) in such manner that the spring sections can move independently of one another and
in such manner that the fixing pin (10a, 10b) serves as a fixed bearing, so that when only one of the sliding elements is released the opposite sliding element is not released with it, so that after one of the sliding elements has been released the structural element can be removed from the support rail by swivelling the mounting support sideways together with a structural element fixed thereto.

2. Mounting support according to Claim 1, **characterised in that** the spring element (9) comprises a plurality of spring arms (11) formed on one another essentially in a meander shape.

3. Mounting support according to Claims 1 or 2, **characterised in that** the sliding elements (5, 6) are fitted with some clearance perpendicular to their direction of movement in the housing (8).

4. Mounting support according to Claim 3, **characterised in that** the sliding elements (5, 6) and the surrounding area of the housing are provided with blocking edges (12, 13; 12', 13') in such manner that the blocking edges (12, 13; 12', 13') can slide away over one another without any lifting movement of the housing (8) relative to the arms of the detent hooks (1, 2) that overlap the support rail (4), so that the movement of the sliding elements is enabled and if a corresponding lifting movement takes place the blocking edges (12, 13; 12', 13') are brought into a colliding position which blocks the movement of the sliding elements.

5. Mounting support according to any of the preceding claims, **characterised in that** the lower inside surfaces of the detent hooks (1, 2) are formed as ramps falling away outwards and the lower outside surfaces of the detent hooks are formed as outwards-rising contact shoulders (16, 17) for abutments (18, 19) on the housing, to restrict the sliding displacement of the sliding elements (5, 6).

6. Mounting support according to any of the preceding claims, **characterised in that** the spring element (9) for locking the detent hooks (1, 2) is formed on the support rail (4).

7. Mounting support according to any of the preceding claims, **characterised in that** the ends of the sliding elements facing away from the spring have actuating webs (20).

## Revendications

1. Pied de fixation (3) en matière plastique avec un composant fixé dessus comme un boîtier de montage (8) rapportable en série, une barrette de bornes ou une telle barrette encliquetable sur des rails porteurs,
le pied de fixation présentant des crochets d'encliquetage (1, 2) destinés à saisir les branches d'un rail porteur (4) qui sont placés sur des parties de coulisse (5, 6) guidée sur le boîtier, les deux parties de coulisse (5, 6) étant reliées entre elles, en particulier d'un seul tenant, par l'intermédiaire d'un élément déformable élastiquement qui, de chaque côté, est muni de tenons de fixation (10a, 10b) destinés à s'engager dans des évidements de forme correspondante ménagés côté boîtier,
l'élément élastique étant conformé en élément ressort (9) qui est subdivisé en des zones de ressort (9a, 9b) par les tenons de fixation (10a, 10c)
**caractérisé en ce que** l'élément ressort (9) est subdivisé par les tenons de fixation (10a, 10b) en des zones de ressort (9a, 9b) autonomes de telle manière que les zones de ressort sont mobiles indépendamment l'une de l'autre, et
de telle manière que le tenon de fixation (10a, 10b) sert d'appui fixe, de sorte que par la libération d'une seule des parties de coulisse, la partie de coulisse opposée n'est pas également libérée, de sorte que le retrait du composant depuis le rail porteur après avoir libéré l'une des parties de coulisse s'effectue par pivotement vers le côté du pied de fixation conjointement avec un composant fixé dessus.

2. Pied de fixation selon la revendication 1, **caractérisé en ce que** l'élément ressort (9) comprend une pluralité de branches de ressort (11) formées les unes contre les autres pour l'essentiel à la façon d'un méandre.

3. Pied de fixation selon la revendication 1 ou 2, **caractérisé en ce que** les parties de coulisse (5, 6) sont montées avec un jeu perpendiculairement à leur direction de déplacement dans le boîtier (8).

4. Pied de fixation selon la revendication 3, **caractérisé en ce que** les parties de coulisse (5, 6) et les parties de boîtier voisines sont munies de bords de blocage (12, 13 ; 12', 13'), de telle manière que sans un mouvement de soulèvement du boîtier (8) par rapport aux crochets d'encliquetage saisissant les branches du rail porteur (4), les bords de blocage (12, 13 ; 12', 13') peuvent glisser les uns sur les autres, de sorte que le mouvement des parties de coulisse est possible et, en présence d'un mouvement de soulèvement approprié, les bords de blocage (12, 13 ; 12', 13') sont amenés dans une position de collision bloquant le mouvement des parties de coulisse.

5. Pied de fixation selon l'une des revendications précédentes, **caractérisé en ce que** les surfaces intérieures inférieures des crochets d'encliquetage (1, 2) sont conformées en biseaux descendant vers l'extérieur et les surfaces extérieures inférieures des crochets d'encliquetage en épaulements d'appui (16, 17) montant vers l'extérieur pour des butées (18, 19) côté boîtier servant à limiter la mobilité des parties de coulisse (5, 6).

6. Pied de fixation selon l'une des revendications précédentes, **caractérisé en ce que** l'élément ressort (9) est conformé pour verrouiller les crochets de verrouillage (1, 2) sur le rail porteur (4).

7. Pied de fixation selon l'une des revendications précédentes, **caractérisé en ce que** les extrémités des parties de coulisses opposées au ressort présentent des barres d'actionnement (20).
